# EUROPÄISCHE PATENTANMELDUNG

(11) **EP 1 642 632 A1**
(43) Veröffentlichungstag der Anmeldung: **05.04.2006**
(21) Anmeldenummer: 05105774.3
(22) Anmeldetag: 29.06.2005
(51) Int. Cl.: B01D 36/00, F02M 37/22, F02M 31/125, F02M 25/028

(54) **Flüssigkeitsfilter**

(30) Priorität: 04.10.2004 DE 102004048565
(71) Anmelder: MANN+HUMMEL GmbH, 71638 Ludwigsburg (DE)
(72) Erfinder: Herrmann, Ralf, 74343, Sachsenheim (DE); Fischer, Helmuth, 74354 Besigheim (DE)

(57) **Zusammenfassung**

Die Erfindung betrifft einen Flüssigkeitsfilter, insbesondere Dieselkraftstofffilter für eine Brennkraftmaschine, mit einer Vorrichtung zum automatischen Austrag von im Flüssigkeitsfilter abgeschiedenem Wasser, aufweisend ein Gehäuse mit wenigstens einem Einlass und wenigstens einem Auslass für die zu filtrierende Flüssigkeit, ein dichtend zwischen Ein- und Auslass angeordnetes Filterelement und einen unterhalb des Filterelementes angeordneten Wassersammelbereich, wobei die Vorrichtung zum automatischen Wasseraustrag unterhalb des Wassersammelbereiches dichtend mit dem Gehäuse verbunden ist, wobei die Vorrichtung zum automatischen Wasseraustrag in einem einzigen Gehäuse ein Sensormittel zur Sensierung des Wasserstandes im Wassersammelbereich, ein elektrisch betriebenes Mittel zum Wasseraustrag aus dem Wassersammelbereich, einen Wasserauslass und einen Mikroprozessor, welcher mit dem Sensormittel, mit dem Wasseraustragsmittel und mit einem Steuergerät der Brennkraftmaschine korrespondierend verbunden ist, aufweist, derart, dass der Mikroprozessor bei einem vorgegebenen Betriebszustand der Brennkraftmaschine bei laufender Brennkraftmaschine und entsprechender Meldung des Sensormittels das Mittel zum Wasseraustrag aktiviert.

## Beschreibung

### Stand der Technik

Die Erfindung betrifft einen Flüssigkeitsfilter mit automatischem Wasseraustrag nach den Merkmalen des Oberbegriffs des Patentanspruchs 1, sowie ein Verfahren zum automatischen Wasseraustrag durch den erfindungsgemäßen Flüssigkeitsfilter nach Anspruch 9.

Der Kraftstoff für Brennkraftmaschinen wird normalerweise gefiltert bevor er zum Betrieb der Brennkraftmaschine genutzt wird. Da das im Kraftstoff enthaltene Wasser durch Oxidation der Metallteile, mit denen es in Kontakt kommt, Schäden verursachen kann, ist es wohl bekannt, speziell bei Dieselkraftstofffiltern die Wasseranteile im Kraftstoff im Kraftstofffilter herauszufiltern. Durch die höhere spezifische Dichte des Wassers sammelt sich das Wasser daraufhin in einem Wassersammelbehälter im unteren Bereich des Kraftstofffilters. Sobald der Wasserstand im Filter eine gewisse Höhe erreicht hat muss das Wasser zur Vermeidung einer Fehlfunktion des Filters aus diesem entfernt werden.

Die WO 01/33069 A1 offenbart einen Kraftstofffilter mit einer unter dem Filterelement angeordneten Wassersammelkammer und einem darunter angeordneten Gehäuse, wobei ein mehrteiliger Wasserstandssensor, welcher einerseits im unteren Gehäuse und andererseits in der Wassersammelkammer angeordnet ist, mit einem im Gehäuse angeordneten Mikroprozessor und einer Wasseraustragsvorrichtung, die ebenfalls im Gehäuse angeordnet ist, verbunden ist. Der Mikroprozessor ist weiterhin mit dem Zündschloss verbunden und die Wasseraustragsvorrichtung und der Wasserstandssensor sind mit dem elektrischen System des Fahrzeugs verbunden. In der Zündschlossposition 1, also bei Versorgung des elektrischen Systems mit Energie aber nicht laufendem Motor, wird beim entsprechenden Signal des Wasserstandssensors über den Mikroprozessor ein Wasseraustrag aktiviert. Der Wasseraustrag wird nach einer vorgegebenen Zeitspanne oder bei Betätigung des Zündschlosses zum Starten oder zum Herausziehen des Zündschlüssels gestoppt.

Nachteilig ist hierbei, dass der Wasserstandssensor in dieser Ausführung durch die miteinander in Kombination stehenden, zueinander beweglichen Teilen anfällig gegenüber Vibrationen oder Verschmutzung ist und somit eventuell nicht der Realität entsprechende Wasserstandsmeldungen abgibt, sowie dass der Wasseraustrag nur bei stehendem Motor in Zündpositionsstellung 1 erfolgt, welches für jeden Wasseraustrag eine Verzögerung im Ablauf bedeutet und wobei dem Führer des Fahrzeuges auch unmissverständlich über z. B. eine Leuchtdiode mitgeteilt werden muss, dass der zulässige Wasserstand erreicht ist und das Fahrzeug nicht sofort gestartet werden darf, sondern erst einmal in der Zündposition 1 verharren muss.

Die Aufgabe der Erfindung ist es nun, die oben genannten Nachteile zu vermeiden, einen Flüssigkeitsfilter mit automatischem Wasseraustrag zu schaffen, welcher eine erhöhte Sicherheit beim Wasseraustrag gegenüber den bisherigen Systemen schafft und ein Verfahren zum Betrieb eines derartigen Flüssigkeitsfilters anzubieten.

Diese Aufgabe wird durch die Merkmale des Patentanspruchs 1 sowie die Merkmale des nebengeordneten Anspruchs 9 gelöst.

### Vorteile der Erfindung

Die erfindungsgemäße Flüssigkeitsfilter, insbesondere Dieselkraftstofffilter für eine Brennkraftmaschine, ist mit einer Vorrichtung zum automatischen Austrag von im Flüssigkeitsfilter abgeschiedenem Wasser ausgestattet. Der Flüssigkeitsfilter weist ein Gehäuse mit wenigstens einem Einlass und wenigstens einem Auslass für die zu filtrierende Flüssigkeit und ein dichtend zwischen Ein- und Auslass angeordnetes Filterelement auf. Das Gehäuse kann dabei rund, oval oder eckig ausgeführt sein und das Filterelement kann als hohlzylindrisches, zick-zack-förmig gefaltetes Filterelement oder als Wickelfilterelement ausgeführt sein, wobei für das Filtermedium ein Filterpapier oder auch ein synthetisches Filtermedium in Frage kommt. Unterhalb des Filterelementes ist im Gehäuse ein Wassersammelbereich angeordnet, welcher bevorzugt korrespondierend mit der Anströmseite des Filterelementes in Verbindung steht, da die Wasserabscheidung bevorzugt am Filterelement erfolgt. Der Wassersammelbereich weist im unteren Bereich wenigstens eine Öffnung auf, wobei der untere Bereich des Wassersammelbereiches dichtend mit einer Vorrichtung zum automatischen Wasseraustrag verbunden ist. Die Vorrichtung zum automatischen Wasseraustrag weist in einem einzigen Gehäuse ein Sensormittel zur Sensierung des Wasserstandes im Wassersammelbereich auf, welches durch die Öffnung im unteren Bereich des Wassersammelbereiches in diesen eingreift. Weiterhin ist in dem Gehäuse ein elektrisch betriebenes Mittel zum Wasseraustrag aus dem Wassersammelbereich und ein Wasserauslass angeordnet. Das elektrisch betriebene Mittel zum Wasseraustrag kann bei Überdrucksystemen einzig und allein aus einem elektrisch angetriebenen Ventil und bei Unterdrucksystemen aus einer Kombination von elektrischer Förderpumpe und elektrischem Ventil bestehen. Überdrucksystem bedeutet dabei, dass der Flüssigkeitsfilter im Strömungsverlauf hinter der Kraftstoffpumpe angeordnet ist, und Unterdrucksystem, dass der Flüssigkeitsfilter im Strömungsverlauf vor der Kraftstoffpumpe angeordnet ist. Das Sensormittel zur Sensierung des Wasserstandes und das elektrisch betriebene Mittel zum Wasseraustrag sind mit einem ebenfalls im Gehäuse angeordneten Mikroprozessor korrespondierend verbunden, welcher zusätzlich mit einem Steuergerät der Brennkraftmaschine korrespondierend verbunden ist. Das Steuergerät kann einerseits das Motorsteuergerät der Brennkraftmaschine selbst sein oder ein damit korrespondierend verbundenes einzelnes Steuergerät. Durch den Mikroprozessor wird bei entsprechender Meldung des Sensormittels zur Sensierung des Wasserstandes bei einem vorgegebenen Betriebszustand der Brennkraftmaschine, welches über das Steuergerät ausgegeben wird, das Mittel zum Wasseraustrag aktiviert. Der Wassersammelbereich kann einstückig im Gehäuse des Flüssigkeitsfilters angeordnet sein oder auch als bevorzugt hohlzylindrisches Bauteil im unteren Bereich mit dem Gehäuse des Flüssigkeitsfilters dichtend verbunden sein. In vorteilhafter Weise erfolgt hier der Wasseraustrag während des normalen Betriebs der Brennkraftmaschine, d. h. dass keine Wartezeiten vor dem Start der Brennkraftmaschine entstehen und auch ein versehentliches Vergessen des Entleerens des Wasserbehälters nicht erfolgen kann, da bei vollem Wassersammelbereich und einem bestimmten Betriebszustand der Brennkraftmaschine, beispielsweise abhängig von der Last oder der Drehzahl, eine vollautomatische Wasseraustragung, unabhängig von Eingriffen des Fahrers der Brennkraftmaschine, vorgenommen wird. Durch die Konzentrierung der Funktionselemente in einem einzigen Gehäuse ist auch im Wartungs- oder Reparaturfall ein einfaches Eingreifen möglich; auch die Ausführung des Wasserstandssensormittels ohne aufeinander abgleitende Mittel, welche in verschiedenen Gehäuseteilen angeordnet sind, birgt eine höhere Funktionssicherheit in sich. Das Sensormittel kann dabei als kapazitiver Sensor, Leitfähigkeitssensor oder Schwimmer ausgeführt werden, es sind auch andere im Stand der Technik bekannte Mittel zur Sensierung eines Wasserstands möglich.

Gemäß einer Ausgestaltung der Erfindung ist zusätzlich unterhalb des Wassersammelbereiches im oder angrenzend zum Gehäuse der Wasseraustragsvorrichtung eine Flüssigkeitsheizung angeordnet. Diese kann beispielsweise ein PTC-Element oder eine Kunststoffheizung sein. Bei der Kunststoffheizung werden Heizkontakte über einen elektrisch leitfähigen Kunststoff miteinander verbunden. Beim Anlegen einer Spannung an die Heizkontakte erwärmt sich der zwischen den Heizstäben angeordnete Kunststoff durch seinen niedrigen elektrischen Widerstand. Dabei kann die Heizung in das Innere des Filtergehäuses hineinragen und so direkt in Kontakt mit der Flüssigkeit diese aufheizen oder beispielsweise auch außen am Filtergehäuse angeordnet sein und über die Wärmeleitung durch das Gehäuse eine Aufheizung der Flüssigkeit verursachen. Die Flüssigkeitsheizung ist weiterhin korrespondierend mit einem Flüssigkeitstemperatursensor verbunden, welcher die Flüssigkeitstemperatur im Inneren des Gehäuses sensiert. Bei Unterschreitung einer vorgegebenen Temperatur der zu filtrierenden Flüssigkeit wird die Flüssigkeitsheizung so lange aktiviert bis eine vorgegebene Temperatur wieder erreicht wird. Dieses ist notwendig, um eine Viskositätssteigerung der Flüssigkeit durch eine zu niedrige Temperatur und eine daraus resultierende Verblockung des Filterelementes zu verhindern. Der Flüssigkeitstemperatursensor kann beispielsweise mit dem Mikroprozessor verbunden sein, wobei der Mikroprozessor dann das Ein- und Abschalten der Heizung in Abhängigkeit von vorgegebenen Kenngrößen steuert.

In einer weiteren Ausführungsform weist das Mittel zum Wasseraustrag eine Pumpe, vorzugsweise eine elektromagnetische Pumpe, und ein elektrisches Ventil auf. Das elektromagnetische Ventil übernimmt hierbei vorzugsweise eine zusätzliche Sicherheitsfunktion, wobei ein erhöhter Druck im Inneren des Systems gleichzeitig eine Erhöhung des Schließdrucks des Ventilsitzes bedeutet. So kann also auch bei einem ungewünschten Überdruck im System ungewollt keine Flüssigkeit nach außen außerhalb des Flüssigkeitsfilters gelangen. Das elektromagnetische Ventil und die elektromagnetische Pumpe sind beide mit dem Mikroprozessor korrespondierend verbunden, derart, dass bei einer Aktivierung des Wasseraustrages durch den Mikroprozessor die Pumpe das Wasser durch das geöffnete Ventil aus dem Wassersammelbereich fördert und im Anschluss daran Pumpe und Ventil ein sicherheitsredundantes System gegenüber Leckage aus dem Flüssigkeitsfilter darstellen. Sollte also durch eine elektrische Fehlfunktion Flüssigkeit durch die Pumpe weiterhin zum Ventil gelangen, wird dennoch durch die ventileigene Sicherheitsfunktion keine Flüssigkeit aus dem Flüssigkeitsfilter ausgetragen. Die Pumpe ist bevorzugt als elektromagnetische Kolbenpumpe ausgelegt, wobei durch verschiedene Rückschlagventile im Inneren auch eine Sicherheit gegenüber einer ungewollten Leckage der Pumpe gegeben ist.

Es ist weiterhin vorteilhaft, dem Mittel zum vollautomatischen Wasseraustrag einen Filter zur Filtrierung des auszutragenden Wassers voranzustellen, um die auf der nicht gefilterten Flüssigkeitsseite noch vorhandenen eventuellen Partikel von der Wasseraustragsvorrichtung fernzuhalten, um so die im Ventil und in der Pumpe vorhandenen Dichtsitze und Ventildichtungen nicht durch die Partikel zu schädigen und so eine Undichtigkeit zu erzeugen. Der Filter kann hierbei ein inline vor das Wasseraustragsmittel geschaltetes rundfilterähnliches Rundfilterelement gleichsam einem passiven Kraftstofffilter oder auch ein feinstmaschiges Metallgitter oder Metallgewirk sein, welches unmittelbar im Einlass der Wasseraustragvorrichtung angeordnet und dichtend befestigt ist. Auch hier besteht ein Vorteil in der direkten Befestigung am Gehäuse der Wasseraustragsvorrichtung, wodurch dann bestehende Flüssigkeitsfilter auch mit diesem Wasseraustragsmodul nachgerüstet werden können, ohne große Umrüstarbeiten am Flüssigkeitsfilter selbst vornehmen zu müssen.

Eine Möglichkeit der Wasserentsorgung besteht darin, den Wasserauslass des Gehäuses des Wasseraustragsmittels mit einer Membran zur Abtrennung von noch im Wasser enthaltenden Kraftstoff zu verbinden, wobei das so gereinigte reine Wasser anschließend über eine Leitung an die Umgebung abgegeben werden kann. Durch die unterschiedlichen chemischen und physikalischen Eigenschaften von Wasser und Kraftstoff ist es möglich, diese beiden Flüssigkeiten über den Einsatz einer entsprechenden Membran zu trennen, wobei das dann vom Kraftstoff befreite Wasser nahezu keine schädlichen Fremdanteile mehr aufweist und an die Umgebung abgegeben werden kann und der vom Wasser befreite Kraftstoff wieder in das Kraftstoffsystem zurückgeführt werden kann.

Gemäß einer alternativen Ausgestaltung der Erfindung ist der Wasserauslass korrespondierend mit dem Ansaugsystem der Brennkraftmaschine verbunden. Dabei wird das ausgetragene Wasser mit den geringen Kraftstoffanteilen im Betrieb der Brennkraftmaschine bei den vorgegebenen Betriebsbedingungen in das Saugrohr eingespritzt. Dort wird es sehr fein vernebelt im Ansaugvorgang mit in den Verbrennungsraum eingesaugt und sorgt im Verbrennungsvorgang für eine Herabsetzung der Verbrennungstemperatur und damit zu einer Reduzierung der entstehenden NOₓ-Gase. Diese Maßnahme wirkt sich also sehr positiv für das Abgasverhalten der Brennkraftmaschine aus.

Ebenso ist es alternativ möglich, den Wasserauslass dichtend mit einem Behälter zur Speicherung des ausgetragenen Wasser-Kraftstoff-Gemisches zu verbinden. Dieser Behälter sollte eine ausreichende Größe aufweisen, vorgeschlagen wir hier ein Volumen von ungefähr einem bis zu mehreren Litern, wobei der Füllstand des Behälters dann von außen visuell oder über ein Sensormittel akustisch oder visuell an das Führerhaus des Fahrzeuges übermittelt werden kann. Der Behälter ist dann in einem bestimmten Turnus oder nach Vorgabe der akustischen oder visuellen Mitteilung regelmäßig zu leeren.

Es ist ebenso möglich, den Wasserauslass korrespondierend mit einer Zuleitung in das Abgassystem zu verbinden. In vorteilhafter Weise wird das ausgetragene Wasser im Betrieb der Brennkraftmaschine dabei vor einen vorhandenen Katalysator eingespritzt, um so die Abgastemperatur zu senken und dadurch die NOₓ-Reduzierung voranzutreiben, wobei es jedoch ebenso möglich ist, bei nicht vorhandenem Katalysator das Kraftstoff-Wasser-Gemisch möglichst nahe der Brennkraftmaschine einzuspritzen.

Das Verfahren zum automatischen Wasseraustrag aus einem oben beschriebenen Flüssigkeitsfilter gliedert sich in folgende Schritte:
- Auf der Anströmseite des Filterelementes des Kraftstofffilters wird das Wasser vom Kraftstoff abgeschieden und sammelt sich daraufhin durch die höhere Dichte im Wassersammelbereich unterhalb des Kraftstoffes,
- ein Wasserstandssensor übermittelt den im Wassersammelbereich vorhandenen Wasserstand (mindestens Minimum- und Maximumerfassung) an den im Wasseraustragsmittelgehäuse vorhandenen Mikroprozessor,
- der Betriebszustand der Brennkraftmaschine wird über ein in der Brennkraftmaschine vorhandenes Steuergerät ebenfalls an den Mikroprozessor übermittelt,
- bei Übereinstimmung mit einem vorgegebenen Betriebszustand und gleichzeitigem Erreichen oder Überschreiten des Wasserstandsmaximums aktiviert der Mikroprozessor das Mittel zum Wasseraustrag,
- das im Wassersammelbereich vorhandene Wasser wird ausgetragen.

Gemäß einer Ausgestaltung des Verfahrens wird weiterhin die Temperatur des Kraftstoffs über einen im Flüssigkeitsfilter angeordneten Temperatursensor erfasst und an den Mikroprozessor weitergeleitet. Der Mikroprozessor aktiviert bei Vorliegen oder Unterschreiten einer vorgegebenen Grenztemperatur eine ebenfalls im Flüssigkeitsfilter angeordnete Kraftstoffheizung, welche solange heizt, bis der im Flüssigkeitsfilter vorhandene Kraftstoff eine vorgegebene Kraftstofftemperatur erreicht.

Bei einem Unterdrucksystem, d. h. bei einem Flüssigkeitsfilter, welcher im Strömungsverlauf vor der Kraftstoffpumpe angeordnet ist, wird durch die Anordnung von elektromagnetischer Förderpumpe und im Strömungsverlauf danach angeordnetem elektromagnetischen Austragsventil eine Redundanz gegen Leckage durch das Austragsventil gebildet.

Bei einem Ausfall der Pumpe durch Kurzschluss und / oder mechanisches Versagen bleibt das Austragsventil dennoch dicht verschlossen und verhindert so ein Austreten von Wasser und Kraftstoff.

Gemäß einer vorteilhaften Ausgestaltung des Verfahrens erfolgt das Abschalten des Wasseraustragsmittels bevorzugt nach Ablauf einer vorgegebenen Zeitspanne. Durch die Kenngrößen des Wasseraustragsmittels, wie z. B. Volumenstromrate, und das Wasservolumen im Wassersammelbereich bis zum Wasserstandsmaximum lässt sich einfach eine Zeitspanne vorgeben, in der das im Wassersammelbereich vorhandene Wasser vollständig ausgetragen wird. Falls der Volumenstrom des auszutragenden Wassers einmal eine Abweichung erfährt, erfolgt durch ein dementsprechendes Signal des Minimumwasserstandssensors an den Mikroprozessor ein vorzeitiges Abschalten des Wasseraustragsmittels vor Ablauf der Zeitspanne. Der Mikroprozessor unterbricht also die zeitgesteuerte Wasseraustragung sobald das Wasserstandsminimum erreicht ist, um ein Austragen von Kraftstoff zu vermeiden.

Es ist vorteilhaft, dass das ausgetragene Wasser über eine Leitung direkt dem Ansaugtrakt der Brennkraftmaschine zugeführt wird und dort zu dem Ansaugluftstrom in wenigstens einem Saugrohr eingespritzt wird. Auch diese Einspritzung erfolgt bei vorgegebenen Betriebszuständen und bewirkt eine Herabsetzung der Verbrennungstemperatur und damit eine Verringerung der Schadstoffemission.

Alternativ hierzu ist es möglich, das ausgetragene Wasser über eine Leitung direkt dem Abgasstrang zuzuführen und dort dem Abgasstrom beizumengen, wobei die Zumengung bei Abgasanlagen mit Katalysator vor dem Katalysator erfolgt. Bei übrigen Systemen sollte die Zumengung nahe dem Beginn des Abgasstranges erfolgen. Auch hierdurch die Abgastemperatur herabgesetzt und eine NOₓ-Reduktion erleichtert.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: eine Frontansicht mit Teilschnitt des erfindungsgemäßen Flüssigkeitsfilters,
- Figur 2: einen Schnitt A-A der Figur 1 im Bereich der Wasseraustragsvorrichtung und
- Figur 3: einen Schnitt B-B der Figur 2 im Bereich der Wasseraustragsvorrichtung.

### Beschreibung der Ausführungsbeispiele

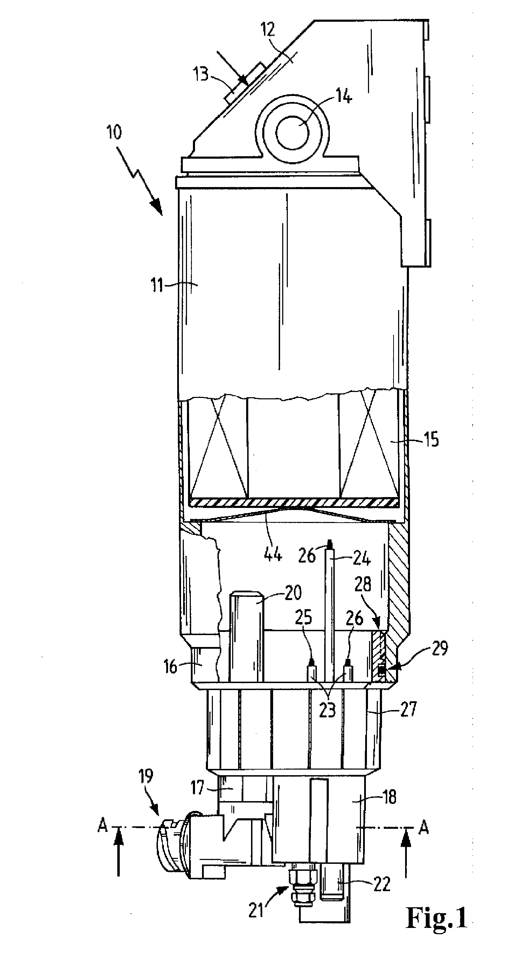

Die Figur 1 zeigt einen Teilschnitt eines Flüssigkeitsfilters 10. Der Flüssigkeitsfilter 10 weist ein Gehäuse 11 mit einem Gehäusekopf 12 und einem Einlass 13 sowie einem Auslass 14 auf. Zwischen Einlass 13 und Auslass 14 ist dichtend ein Filterelement 15 angeordnet, welches durch eine Patronenführung 44 im Gehäuse 11 abgestützt wird. Unterhalb des Gehäuses 11 ist ein Sammelbehälter 16 angeordnet. Wiederum unterhalb des Sammelbehälters 16 sind ein Heizungsbehälter 17 und eine Wasseraustragsvorrichtung 18 vorgesehen. Der Heizungsbehälter 17 weist einen Anschlussstecker 19 für die Verbindung mit einer Stromquelle sowie eine PTC-Heizung 20, welche in den Sammelbehälter 16 hineinragt, auf. Heizungsbehälter 17 und Sammelbehälter 16 sind dichtend miteinander verbunden. Die Wasseraustragsvorrichtung 18 weist eine Kabelzuführung 21, ebenfalls zur Stromversorgung und zur Versorgung mit Signalen eines hier nicht dargestellten Steuergerätes, sowie einen Wasserauslass 22 auf. Der Wasserauslass 22 kann dabei über z. B. eine Schlauchverbindung, welche hier ebenfalls nicht dargestellt ist, mit weiteren Elementen, die der Behandlung des ausgetragenen Wassers dienen, verbunden sein. Auch die Wasseraustragsvorrichtung 18 ist dichtend mit dem Sammelbehälter 16 verbunden. Im oberen Bereich der Wasseraustragsvorrichtung 18 sind in den Sammelbehälter 16 hineinragend zwei kurze Sensorstäbe 23 und ein langer Sensorstab 24 zur Sensierung des Wasserstandes angeordnet. Dabei weist einer der kurzen Sensorstäbe 23 eine Masseelektrode 25 und die beiden anderen Sensorstäbe 23, 24 weisen im oberen Bereich Pluselektroden 26 auf. Durch die Höhe der Elektroden 25, 26 ist der zu sensierende Minimum- und Maxiumwasserstand im Sammelbehälter 16 festgelegt. Zur Messung des Wasserstandes wird an die Sensorstäbe 23, 24 im Inneren der Wasseraustragsvorrichtung 18 einmal eine negative und zweimal eine positive Spannung oder aber zweimal eine negative und einmal eine positive Spannung angelegt, so dass bei allmählicher Füllung des Sammelbehälters 16 mit dem leitfähigen Wasser durch einen Kurzschluss zwischen den beiden kurzen Sensorstäben 23 das Erreichen eines Minimalwasserstandes sensiert werden kann und dass bei einem Erreichen eines Maximalwasserstandes ein zusätzlicher Kurzschluss zwischen dem langen Sensorstab 24 und dem kurzen Massensensorstab 23 sensiert werden kann. Heizungsbehälter 17 und Wasseraustragsvorrichtung 18 sind hier in zwei verschiedenen Gehäusen angeordnet, es ist jedoch auch möglich, diese Funktionselemente in einem einzigen Gehäuse unterhalb des Sammelbehälters 16 anzuordnen. Die PTC-Heizung 20 ist eine selbstregelnde Heizung, d. h. dass sich der Widerstandswert in Abhängigkeit der Temperatur ändert und es so nicht zu einer Überhitzung kommen kann. Über einen hier nicht weiter dargestellten Temperatursensor, welcher überall im Gehäuse 11, im Gehäusekopf 12 oder im Sammelbehälter 16 angeordnet sein kann, wird die Temperatur der Flüssigkeit im Flüssigkeitsfilter gemessen und bei Unterschreiten bzw. Überschreiten vorgegebener Grenztemperaturen wird die PTC-Heizung deaktiviert bzw. aktiviert. Der Sammelbehälter 16 weist umfangsseitig eine Profilkontur 27 auf, mit derer der Sammelbehälter 16 über ein entsprechendes Werkzeug oder mit der Hand über ein am Sammelbehälter 16 vorhandenes Gewinde 28 mit dem Gehäuse 11 verbunden und gelöst werden kann. Zur Abdichtung zwischen Sammelbehälter 16 und Gehäuse 11 ist in einer Nut des Sammelbehälters 16 ein O-Ring 29 angeordnet.

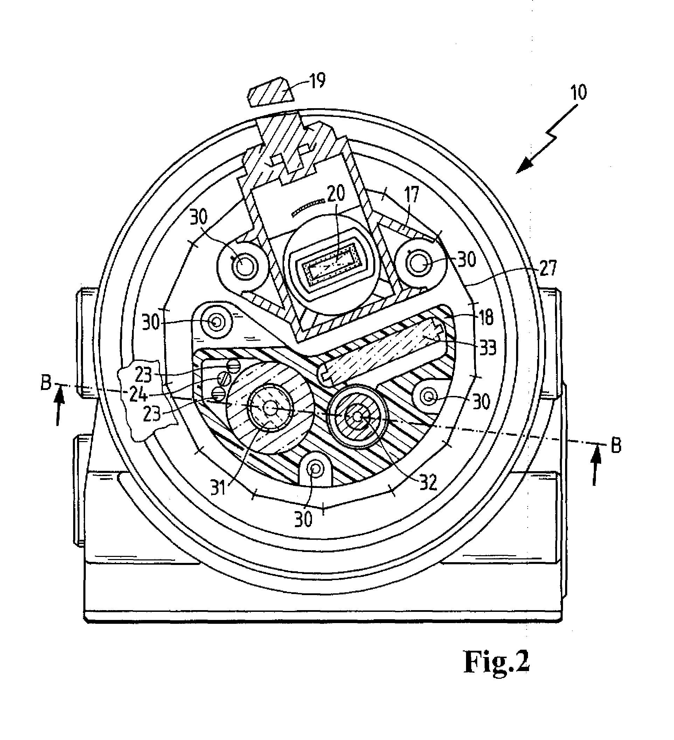

Die Figur 2 zeigt einen Schnitt A-A der Figur 1 durch den Flüssigkeitsfilter 10 im Bereich der Wasseraustragsvorrichtung 18. Der Figur 1 entsprechende Bauteile sind mit den gleichen Bezugszeichen versehen. Der Heizungsbehälter 17 und die Wasseraustragsvorrichtung 18 weisen Befestigungsbohrungen 30 auf, durch die diese beiden Gehäuse 17, 18 mit dem Sammelbehälter 16 lösbar verbunden werden (nicht dargestellt). In der Wasseraustragsvorrichtung 18 sind eine elektromagnetische Pumpe 31, ein elektromagnetisches Ventil 32 und ein Mikroprozessor 33 angeordnet, wobei diese durch die Kabelzuführung 21 aus der Figur 1 mit Strom versorgt werden und untereinander auch mit Kabeln korrespondierend verbunden sind. Bei einer entsprechenden Maximumwasserstandsmeldung über die Sensorstäbe 23, 24 und weiterhin einem entsprechenden Betriebszustand der Brennkraftmaschine, gemeldet durch ein Signal eines hier nicht dargestellten Steuergerätes an den Mikroprozessor 33, gibt der Mikroprozessor 33 ein entsprechendes Signal an Pumpe 31 und Ventil 32 zum Wasseraustrag aus dem Sammelbehälter 16. Die Heizung 20 des Heizungsbehälters 17 kann entweder über ein direktes Signal eines nicht dargestellten Temperatursensors geschaltet werden, oder aber auch über den Mikroprozessor an- und ausgeschaltet werden. Die äußere geometrische Form von Wasseraustragsvorrichtung 18 und Heizungsgehälter 17 korrespondieren äußerlich mit der geometrischen Form des Sammelbehälters 16 und an ihren Berührungspunkten miteinander, um nicht wesentlich über eine projizierte Fläche des Flüssigkeitsfilters 10 hinauszuragen. Auf diese Art und Weise kann der Platzbedarf des Flüssigkeitsfilters im Motorraum gering gehalten werden.

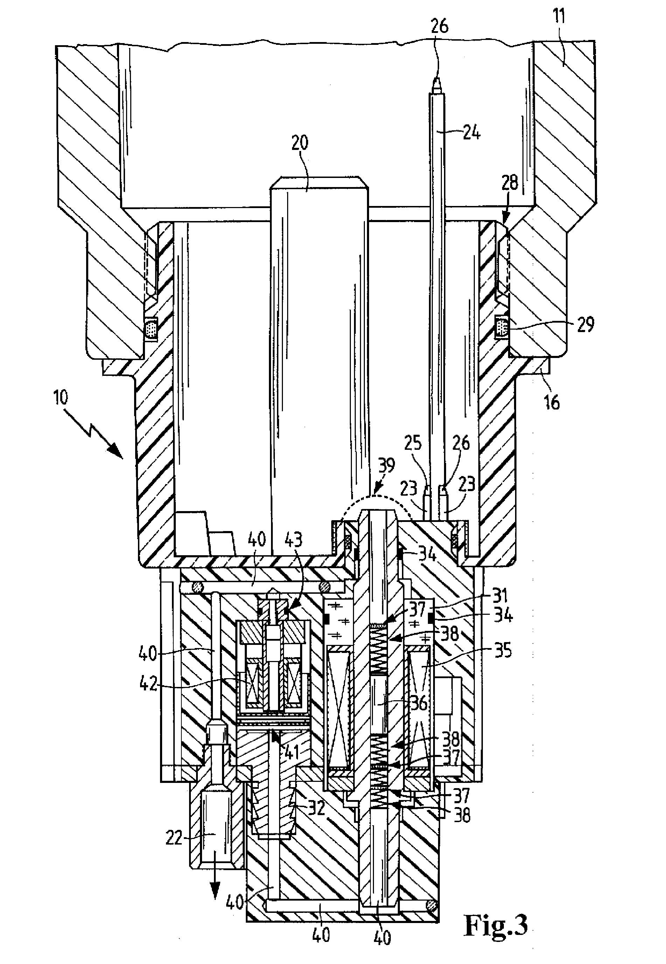

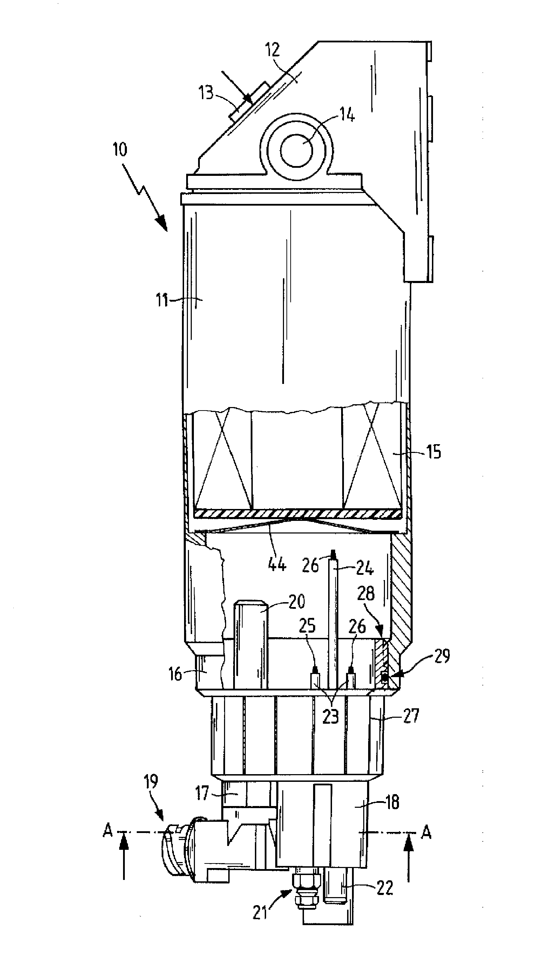

Figur 3 zeigt einen Schnitt B-B der Figur 2 durch den Flüssigkeitsfilter 10 im Bereich der Pumpe 31 und des Ventils 32 der Wasseraustragsvorrichtung 18. Den vorherigen Figuren entsprechende Bauteile sind mit den gleichen Bezugszeichen versehen. Die Pumpe 31 ist in der Wasseraustragsvorrichtung 18 angeordnet und durch ein Dichtmittel 34 gegenüber dem Gehäuse abgedichtet. Die elektromagnetische Pumpe 31 weist eine hohlzylindrische Spule 35, welche über ein System von Kolben 36, Rückschlagventilen 37 und Federn 38 (schematisch dargestellt) für eine Förderung des auszutragenden Wassers sorgt. Eine derartige Pumpe ist ein Standardbauteil und lässt sich beispielsweise bei der Firma Gotec beziehen. Das auszutragende Wasser wird über ein Metallsieb 39 von Grobpartikeln befreit und strömt dann durch die Kanäle 40, angesaugt durch die selbst ansaugende, elektromagnetische Pumpe 31, in das elektromagnetische Ventil 32. Auch hier ist eine Spule 42 vorhanden, welche über einen Ventilsitz 41 für ein Öffnen und Schließen des Ventils 32 sorgt. Das Ventil 32 bietet hier eine Redundanzfunktion gegenüber Undichtigkeit für die Pumpe 31, wobei bei Überdrucksystemen das Ventil 32 alleine ausreicht, um einen Wasseraustrag zu realisieren. Auch das Ventil 32 ist über ein Dichtmittel 43 gegenüber dem Gehäuse der Wasseraustragsvorrichtung 18 abgedichtet.

## Patentansprüche

1. Flüssigkeitsfilter, insbesondere Dieselkraftstofffilter für eine Brennkraftmaschine, mit einer Vorrichtung zum automatischen Austrag von im Flüssigkeitsfilter abgeschiedenem Wasser, aufweisend ein Gehäuse mit wenigstens einem Einlass und wenigstens einem Auslass für die zu filtrierende Flüssigkeit, ein dichtend zwischen Ein- und Auslass angeordnetes Filterelement und einen unterhalb des Filterelementes angeordneten Wassersammelbereich, wobei die Vorrichtung zum automatischen Wasseraustrag unterhalb des Wassersammelbereiches dichtend mit dem Gehäuse verbunden ist, **dadurch gekennzeichnet, dass** die Vorrichtung zum automatischen Wasseraustrag in einem einzigen Gehäuse ein Sensormittel zur Sensierung des Wasserstandes im Wassersammelbereich, ein elektrisch betriebenes Mittel zum Wasseraustrag aus dem Wassersammelbereich, einen Wasserauslass und einen Mikroprozessor, welcher mit dem Sensormittel, mit dem Wasseraustragsmittel und mit einem Steuergerät der Brennkraftmaschine korrespondierend verbunden ist, aufweist, derart, dass der Mikroprozessor bei einem vorgegebenen Betriebszustand der Brennkraftmaschine bei laufender Brennkraftmaschine und entsprechender Meldung des Sensormittels das Mittel zum Wasseraustrag aktiviert.

2. Flüssigkeitsfilter nach Anspruch 1, **dadurch gekennzeichnet, dass** ebenfalls unterhalb des Wassersammelbereiches im oder angrenzend zum Gehäuse der Wasseraustragsvorrichtung eine Flüssigkeitsheizung angeordnet ist, welche korrespondierend mit einem Flüssigkeitstemperatursensor verbunden ist, derart, dass die zu filtrierende Flüssigkeit bei Unterschreitung einer vorgegebenen Temperatur zur Vermeidung einer Viskositätssteigerung der Flüssigkeit und einer **dadurch** resultierenden Verblockung des Filterelementes durch die Flüssigkeitsheizung aufgeheizt wird.

3. Flüssigkeitsfilter nach einem der vorhergehenden Ansprüche, **dadurch gekennzeichnet, dass** das Mittel zum Wasseraustrag eine Pumpe, vorzugsweise eine Elektromagnetpumpe, und ein elektrisches Ventil aufweist, wobei beide Teile mit dem Mikroprozessor korrespondierend verbunden sind, derart dass bei Aktivierung des Wasseraustrages die Pumpe das Wasser durch das geöffnete Ventil aus dem Wassersammelbereich fördert und im Anschluss daran Pumpe und Ventil ein sicherheitsredundantes System gegenüber Leckage aus dem Flüssigkeitsfilter darstellen.

4. Flüssigkeitsfilter nach einem der vorhergehenden Ansprüche, **dadurch gekennzeichnet, dass** mit dem einzigen Gehäuse der Vorrichtung zum automatischen Wasseraustrag ein Filter zur Filtrierung des auszutragenden Wassers verbunden ist, derart, dass im Wasser vorhandene Partikel vor dem Mittel zum Wasseraustrag ausgefiltert werden.

5. Flüssigkeitsfilter nach einem der vorhergehenden Ansprüche, **dadurch gekennzeichnet, dass** der Wasserauslass mit einer Membran zur Trennung von noch im Wasser enthaltenen Kraftstoff verbunden ist, wobei das so gereinigte reine Wasser anschließend über eine Leitung an die Umgebung abgegeben wird.

6. Flüssigkeitsfilter nach einem der Ansprüche 1 bis 4, **dadurch gekennzeichnet, dass** der Wasserauslass dichtend mit einem Behälter zur Speicherung des ausgetragenen Wassers verbunden ist.

7. Flüssigkeitsfilter nach einem der Ansprüche 1 bis 4, **dadurch gekennzeichnet, dass** der Wasserauslass korrespondierend mit dem Ansaugsystem verbunden ist, derart, dass das ausgetragene Wasser im Betrieb der Brennkraftmaschine in das Saugrohr eingespritzt wird.

8. Flüssigkeitsfilter nach einem der Ansprüche 1 bis 4, **dadurch gekennzeichnet, dass** der Wasserauslass korrespondierend mit einer Zuleitung in das Abgassystem verbunden ist, derart, dass das ausgetragene Wasser im Betrieb der Brennkraftmaschine bei Vorhandensein eines Katalysators vor diesem und ansonsten möglichst nahe der Brennkraftmaschine eingespritzt wird.

9. Verfahren zum automatischen Wasseraustrag mit einem Flüssigkeitsfilter insbesondere Dieselkraftstofffilter, gemäß einem der vorhergehenden Ansprüche, wobei das Wasser anströmseitig durch das Filterelement aus dem Kraftstoff abgeschieden wird und sich daraufhin durch die höhere Dichte im Wassersammelbereich unterhalb des Kraftstoffes sammelt, **dadurch gekennzeichnet, dass** über das Wasserstandssensormittel wenigstens ein Wasserstandsmaximum und -minimum an den Mikroprozessor übermittelt wird, wobei zusätzlich der Betriebszustand der Brennkraftmaschine über ein Steuergerät an den Mikroprozessor übermittelt wird, wobei bei Vorliegen eines vorgegebenen Betriebszustandes und bei gleichzeitiger Erreichung oder Überschreitung des Wasserstandsmaximums der Mikroprozessor das Mittel zum Wasseraustrag aktiviert und so das im Wassersammelbereich vorhandene Wasser ausgetragen wird, wobei das Mittel zum Wasseraustrag bei Unterdrucksystemen eine Pumpe und ein Austragsventil und bei Überdrucksystemen nur ein Austragsventil aufweist.

10. Verfahren gemäß Anspruch 9, **dadurch gekennzeichnet, dass** weiterhin die Temperatur des Kraftstoffes über einen im Flüssigkeitsfilter angeordneten Temperatursensor erfasst wird, an den Mikroprozessor weitergeleitet wird und der Mikroprozessor bei Vorliegen oder Unterschreiten einer vorgegebenen Temperatur eine ebenfalls im Flüssigkeitsfilter angeordnete Kraftstoffheizung aktiviert und diese beim Erreichen einer vorgegebenen Kraftstofftemperatur wieder ausgeschaltet wird.

11. Verfahren nach einem der Ansprüche 9 bis 10, **dadurch gekennzeichnet, dass** bei einem Unterdrucksystem durch das im Strömungsverlauf nach der elektrischen Pumpe angeordnete elektrische Austragsventil eine Redundanzfunktion gegenüber Leckage gebildet wird, und so bei einem Ausfall der Pumpe durch Kurzschluss und/oder mechanisches Versagen das elektrische Ventil durch eine von der Elektrizität unabhängige Schließfunktion ein Austreten von Flüssigkeit verhindert.

12. Verfahren nach einem der Ansprüche 9 bis 11, **dadurch gekennzeichnet, dass** das Abschalten des Wasseraustragsmittels bevorzugt nach Ablauf einer vorgegebenen Zeitspanne erfolgt, wobei jedoch bei Erreichen des Wasserstandsminimums und bei dementsprechenden Wasserstandssensorsignal ein vorzeitiges Abschalten des Wasseraustragsmittels vor Ablauf der Zeitspanne erfolgt, um ein Austragen von Kraftstoff zu vermeiden.

13. Verfahren nach einem der Ansprüche 9 bis 12, **dadurch gekennzeichnet, dass** das ausgetragene Wasser über eine Leitung direkt dem Ansaugtrakt der Brennkraftmaschine zugeführt wird und dort dem Ansaugluftstrom in wenigstens einem Saugrohr hinzugeführt wird, wodurch eine Herabsetzung der Verbrennungstemperatur und damit eine Verringerung der Schadstoffemission erzielt wird.

14. Verfahren nach einem der Ansprüche 9 bis 12, **dadurch gekennzeichnet, dass** das ausgetragene Wasser über eine Leitung direkt dem Abgasstrang zugeführt wird und dort dem Abgasstrom beigemengt wird, wobei die Zumengung bei Abgasanlagen mit Katalysator vor dem Katalysator und bei übrigen Systemen nahe dem Beginn des Abgasstranges erfolgt.
